# EUROPEAN PATENT SPECIFICATION

(11) **EP 0 726 640 B1**
(45) Date of publication and mention of the grant of the patent: **05.12.2001**
(21) Application number: 96300957.6
(22) Date of filing: 12.02.1996
(51) Int. Cl.: H02M 1/12

(54) **AC/DC converter power supply circuit**
Gleichrichter-Leistungsversorgungsschaltung
Circuit convertiseur alternatif-continu pour alimentation de puissance

(30) Priority: 10.02.1995 JP 2303195; 09.03.1995 JP 4994495
(43) Date of publication of application: 14.08.1996
(73) Proprietor: KABUSHIKI KAISHA TOSHIBA, Kawasaki-shi, Kanagawa-ken 210-8572 (JP)
(72) Inventor: Ochiai, Masashi, 1-1-1, Shibaura, Minato-ku, Tokyo (JP)
(74) Representative: O'Connell, David Christopher

(56) References cited:
- FR-A- 2 696 311
- US-A- 4 642 745
- US-A- 5 113 337

## Description

The present invention relates to an AC/DC converter power supply circuit for using in an electronic apparatus such as a television receiver, more particularly, to a circuit for improving the power factor of an AC/DC converter power supply circuit.

In a recent electronic apparatus, the more its high efficient, miniaturization and lightweight by using an IC technique the more high efficient, miniaturization and lightweight as a same way in the power supply device which is essential for such electronic apparatus will be required. As the regulated power supply which satisfies the requirement. there is a power supply source circuit adopting a switching system.

The regulated DC voltage circuit requiring the switching system changes its conductive period by turning ON/OFF the input DC power supply voltage by a high speed switching element such as a transistor, and controls the output DC voltage in constant by changing the ON/OFF cycle.

While the switching power supply circuit adopts various systems, the power supply circuit in the DC/DC converter system by the high frequency inverter will be explained hereinafter.

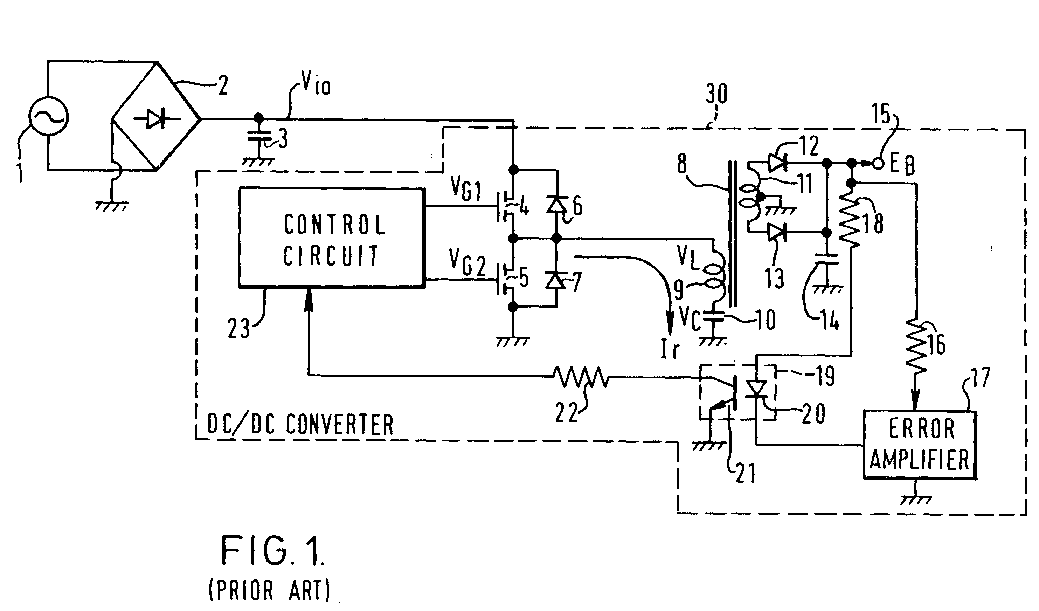

FIGURE 1 shows a circuit diagram of a conventional AC/DC converter power supply circuit.

In FIGURE 1 the power supply voltage from a commercial AC power supply source 1 is full-wave rectified by the diode bridge rectifier circuit 2, smoothed by the smoothing capacitor 3 and supplied to the DC/DC converter.

The DC/DC converter 30 connecte MOS FETs 4. 6 in series as the first and the second switching elements between the positive output terminal of the smoothing capacitor 3 and the reference potential source. And further, it connects diodes 6, 7 in parallel to the MOS FETs 4, 5 with the polarity where the current flows in the opposite direction to the switching current of the MOS FETs 4, 5. That is, the cathode and the anode of the diode 6 are connected to the drain, source of the MOS FET 4, while the cathode and the anode of the diode 7 are connected to the drain and the source of the MOS FET 5. A gate pulse for alternately turning ON/OFF the MOS FETs 4. 5 is supplied from a control circuit 23 to the gates of the MOS FETs 4, 5. A series circuit of a primary winding 9 of the transformer 8 and a resonant capacitor 10 is connected between the coupling node of the first parallel circuit which is comprised of the MOS FET 4 and the diode 6 and the second parallel circuit which is comprised of the MOS FET 5 and the diode 7 and the reference potential source, a predetermined AC voltage is output from the secondary winding 11 of the transformer 8. The first parallel circuit comprised of the MOS FET 4 and the diode 6, the second parallel circuit comprised of the MOS FET 5 and the diode 7. a series circuit comprised of the primary winding 9 and the resonant capacitor 10 and the control circuit 23 compose the half-bridge type high frequency inverter for converting the DC voltage into an AC voltage.

One end of the secondary winding 11 of the transformer 8 is connected to and AC voltage output terminal 15 via a rectifier diode 12, and the other end of the secondary winding 11 is connected to the AC voltage output terminal 15 *via* a rectifier diode 13. The shunt of the secondary winding 11 is connected to the reference potential source. A smoothing capacitor 14 is connected between the coupling node of the cathodes of the diodes 12, 13 and the reference potential source. The secondary winding 11, the rectifier diodes 12 and 13, and the ground line connected to the shunt of the secondary winding 11 comprise the full-wave rectifier on the secondary side of the transformer 8.

A DC voltage EB from the DC voltage output terminal 15 is supplied to an error amplifier 17 via a resistor 16. The DC voltage EB is compared with the reference value and amplified in the error amplifier 17. According to the error voltage that is the output of the error amplifier 17, a current flows into a series circuit of a resistor 18 and a light emitting diode 20. An error signal is transmitted to a light sensing transistor 21 by usine a photo coupler 19 comprised of the light emitting diode 20 and the light sensing transistor 21, then returned to a control circuit 23 as an control signal via a resistor 22. The control circuit 23 for controlling the ON/OFF of the first and the second switching elements, i.e., the MOS FETs 4, 5 alternately changes the frequency of the gate pulse which supply to the MOS FETs 4. 5 by the feedback control signal and controls the ON/OFF cycle of the MOS FETs 4. 5 so as to always stabilize the output voltage EB.

Next, the operation of the circuit in FIGURE 1 will be explained in reference to FIGURES 2 and 3.

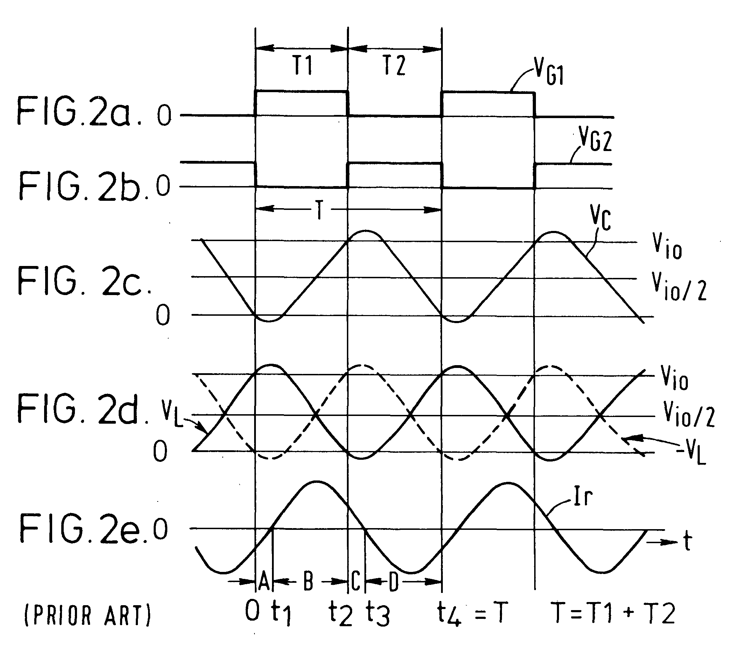

FIGURE 2-a through 2-e show the waveforms of the voltage and the current in the DC/DC converter 30 in FIGURE 1.

VG1 and VG2 as shown in FIGURES 2-a. 2-b denote the gate pulses of the MOS FETs 4. 5. VC in FIGURE 2-c denotes a sine-wave voltage (resonant voltage) which presents across the resonant capacitor 10. VL in FIGURE 2-d denotes a sine-wave voltage (resonant voltage) which presents across the primary winding 9 of the transformer 30. The voltage Vi0 as shown in FIGURES 2-c and 2-d is obtained by the full-wave rectification by the diode bridge rectifier circuit 2 and omoothod by the smoothing capacitor 3. Ir in FIGURE 2-e denotes a sine-wave current flowing through the primary winding 9 and the resonant capacitor 10. The direction indicated by the arrow in FIGURE 1 is a positive direction of the current Ir.

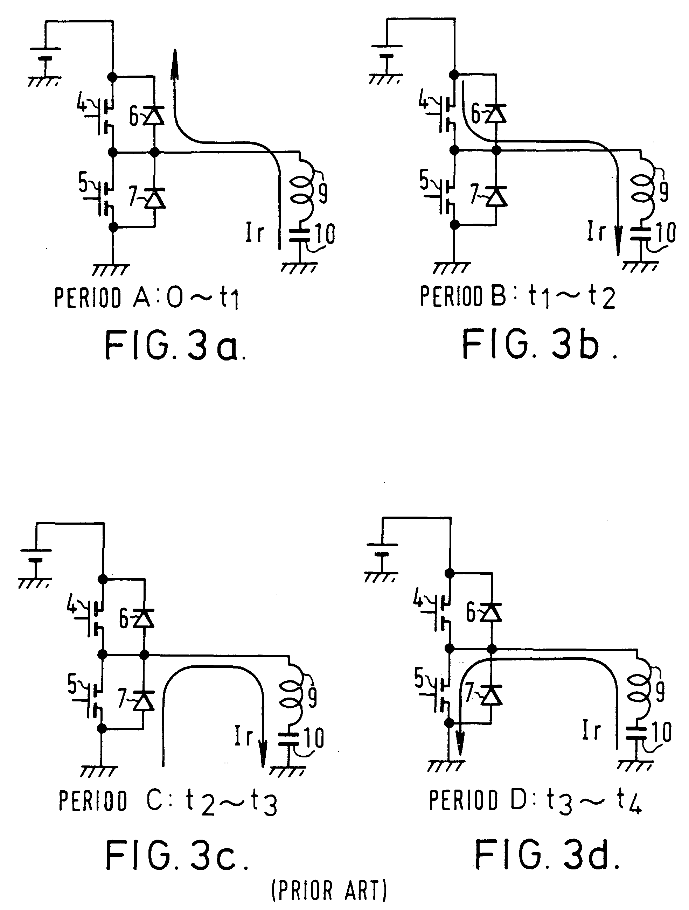

FIGURES 3-a through 3-d illustrate the operation of one cycle period about the sine-wave current Ir.

As shown in FIGURE 2-b, when the time t = 0 and the gate pulse VG2 to the MOS FET 5 disappears, the MOS FET 5 is turned OFF. At the period D just before the time t = 0 (period equivalent to t = t3 - t4 in FIGURE 2, the current Ir which flows from the resonant capacitor 10 to the MOS FET 5 through the primary winding 9 of the transformer 8 (at this time, the current Ir flows due to an electric charge stored in the resonant capacitor 10) flows for the period A (the period of t = 0 - t1: the first damper period) as shown in FIGURE 3-a, through a first diode 6 by discharging the energy stored in the primary winding 9 when t = 0. The current Ir is a sine-wave current as shown as in FIGURE 2-e when the load connected to the secondary side of the transformer 8 is zero. Since the gate pulse VG1 has already supplied to the MOS FET 4 after t = 0 when the time goes to t1, the first diode is turned OFF and the current Ir flows from the DC power supply via the MOS FET 4 in the positive direction for the period B (t = t1 - t2) as shown in FIGURE 3-b. Next, when the time becomes t2 since the gate pulse VG1 disappears the MOS FET 4 is turned OFF and the current Ir keeps flowing from the winding 9 to the capacitor 10 via the second diode 7 in the positive direction for the period C (t = t2 - t3: the second damper period) as shown in FIGURE 3-c. Since the gate pulse VG2 has already been supplied to the MOS FET 5 and turned OFF after time t2 when the time goes to t3, the second diode 7 is turned OFF. the current Ir flows via the winding 9 and the MOS FET 5 in the negative direction based on an electronic charge charged to the capacitor 10 as shown for the period D (t = t3 - t4) as shown in FIGURE 3-d. When the time become t4 the gate pulse VG2 to the MOS FET 5 disappears and the operation of the current Ir returns to the operation of time t = 0.

The foregoing is the explanation of the one cycle period operation of the switching elements 4, 5, the primary winding 9 and the resonant capacitor 10. And, since the width of the gate pulses t1 and t2 are set equally (see FIGURE 2) the MOS FET 4, the MOS FET 5, the first diode θ and the second diode 7 repeat the ON/OFF operations with the same conducting period, and the power which is needed for the operation of the one cycle period is supplied to the series circuit of the primary winding 9 of the transformer 8 and the resonant capacitor 10 from the rectifier power supply source of the diode bridge rectifier circuit 2. That is, the power which will be consumed in every period is supplied from the rectifier power supply source. At this time sine-wave voltage VL and VC having different phase each other as shown by VL and VC in FIGURE 2 are generated in the primary winding 9 of the transformer 8 and the resonant capacitor 10. In the secondary winding of the transformer 8 a sine-wave voltage which is proportional to the voltage presenting in the primary winding 9 is generated according to the transformer turn ratio. it is full-wave rectified by the rectifier diodes 12. 13 and the smoothing capacitor 14 then supplied to the load (not shown) as an output DC voltage EB.

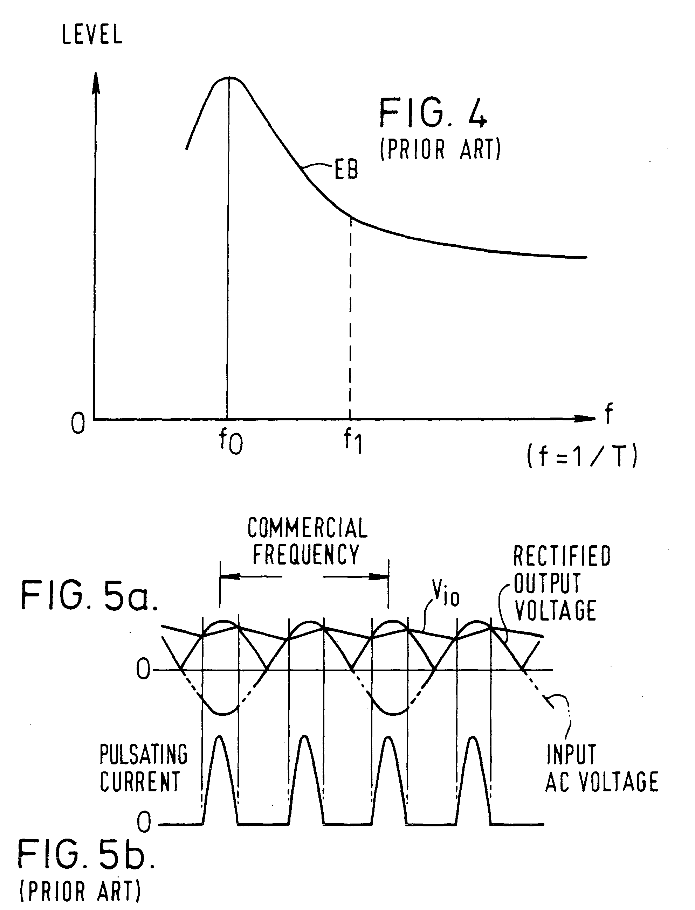

FIGURE 4 shows the controlling characteristic of the output DC voltage EB of the AC/DC converter power supply circuit. The switching frequency f of the switching element is shown in the horizontal axis and the output DC voltage EB is shown in the vertical axis. The output DC voltage EB is controlled by changing the switching frequencies f of the MOS FETs 4, 5 as the switching elements the frequencies of the gate pulses VC1 and VG2 to a resonant frequency fo which is depend on the primary winding 9 and the value of the resonant capacitor 10. For instance. when the MOS FETs 4, 5 operate at the switching frequency f, the load current increases and the output DC voltage EB decreases the error voltage is return to the primary control circuit from an error amplifier 17 through the photo coupler 19 so as to reduce the switching frequency f of the MOS FETs 4, 5 and to increase the output voltage EB automatically.

FIGURE 5 shows the operation of the diode bridge rectifier circuit 2 in the AC/DC converter power supply circuit. The smoothing capacitor 3 is connected to the output of the diode bridge rectifier circuit 2 as shown in FIGURE 1, the power supply source voltage from the AC power supply source 1 is full-wave rectified by the diode bridge rectifier circuit 2 and smoothed by the smoothing capacitor 3. So, as shown by the voltage waveform in FIGURE 5-a, a power supply source ripple voltage (Vi0 fluctuation) contained in the voltage Vi0 which is smoothed and the rectifier output voltage is very small, the conducting period of the diode bridge rectifier circuit 2 for a period of the power supply source frequency is extremely short. In other words, the rectified current flowing in the power supply line flows only when the full-wave rectifier output voltage in the diode bridge rectifier circuit 2 exceeds the voltage charged to the smoothing capacitor 3 and becomes a pulsating current as shown in FIGURE 5-a so that the width of the conductive period to one cycle period of the power supply frequency is narrow. Therefore, there is a drawback that the power factor of the power supply source line is as low as 0.6 and harmonic wave currents contained in the pulsating current are large.

So. in order to overcome the problem, if the capacity of the smoothing capacitor 3 is reduced the conducting period of the diode bridge rectifier circuit 2 is extended, the power factor also increases while the harmonic waves current contained in the pulsating current decreases. However, since tho smoothness (an integral effect) by the smoothing capacitor 3 increases and the ripple voltage which has a twice frequency as much as the commercial Dower supply voltage frequency contained in the output voltage EB as seen in the full-wave rectifier waveform the circuit fails to carry out its original function as a constant voltage circuit.

As described above, a conventional circuit had drawbacks that the power factor of the power supply source line is low and the harmonic waves current contained in the rectified current increases. On the other hand, if the capacitance of the smoothing capacitor decreases in order to improve these drawbacks mentioned above the ripple increases and the circuit fails to carry out its original function as a constant voltage circuit.

US 5,113,337 (Steigerwald) discloses a known circuit for providing a high power factor in a power supply, but requires PWM means to control the amplitude of the regulated output voltage, plus the use of an active filter, a DC-DC converter and a four MOSFET DC-AC converter stage.

It is, therefore, an object of the present invention to provide an AC/DC converter power supply circuit that is capable of increasing the power factor of the AC power supply line decreasing the harmonic waves current contained in the rectified current and performing its original function as a constant voltage circuit.

In order to achieve the above object, an AC/DC converter power supply circuit according to a first aspect of the present invention includes:
an AC power supply source for generating a source voltage;
a first rectifier for full-wave rectifying the AC power supply source voltage;
a second rectifier for further rectifying and smoothing the voltage rectified by the first rectifier;
a DC/DC converter having a high frequency inverter which generates a second AC voltage, and comprises a switching element adapted for receiving a DC voltage rectified and smoothed in the second rectifier circuit, a transformer for receiving a switching current generated by the switching element to their primary winding, and a resonant capacitor coupled in series with the primary winding;
and in that it further comprises adding means for adding the second AC voltage generated by the high frequency inverter of the DC/DC converter, in accordance with a resonance occurring in a series circuit of the primary winding of the transformer and the resonant capacitor, to the first rectifier voltage outputted from the first rectifier circuit.

For a better understanding of the present invention and many of the attendant advantages thereof, reference will now be made by way of example to the accompanying drawings, wherein:
FIGURE 1 is a circuit diagram showing the conventional AC/DC converter power circuit;
FIGURE 2 is a diagram explaining the operation of the circuit which is common to the embodiment of the present invention and the conventional circuit;
FIGURE 3 is a diagram explaining the operation of the circuit which is common to the embodiment of the present invention and the conventional circuit:
FIGURE 4 is a diagram explaining the operation of the circuit which is common to the embodiment of the present invention and the conventional circuit;
FIGURE 5 is a diagram showing the operation of the conventional circuit as shown in FIGURE 1;

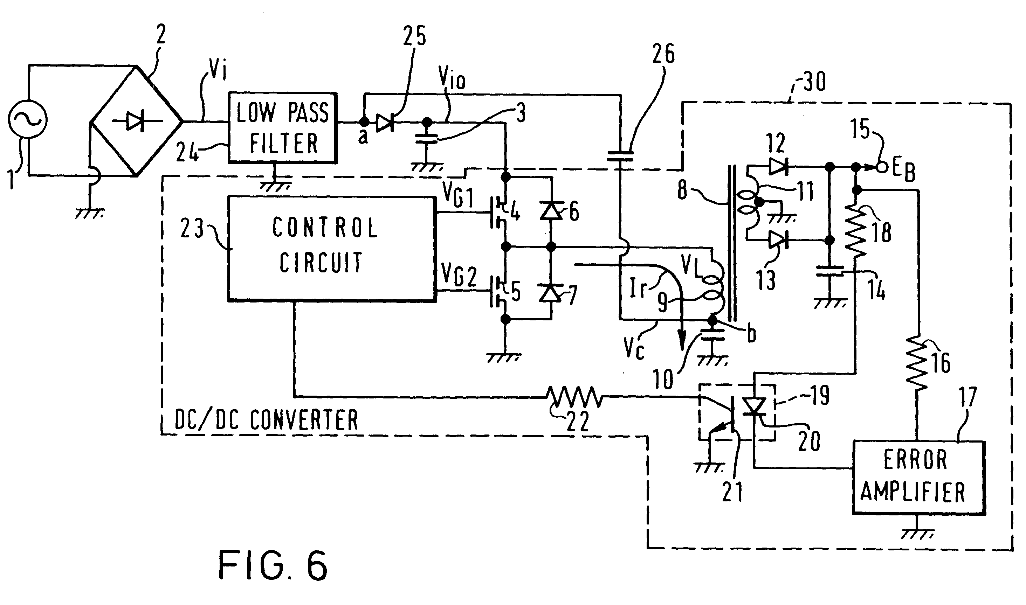

FIGURE 6 is a circuit diagram showing an embodiment of the AC/DC converter power circuit according to the present invention;

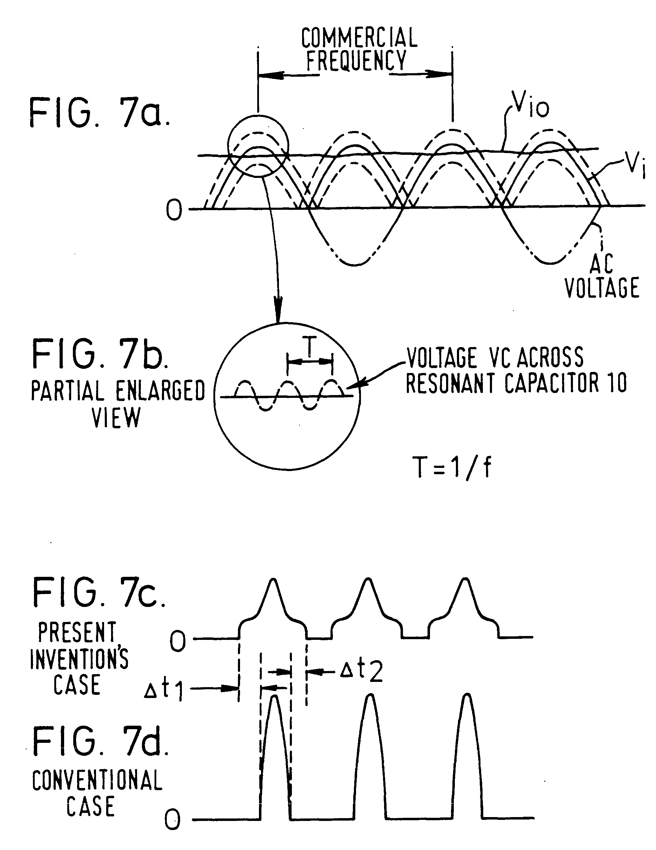

FIGURE 7 is a waveform diagram explaining the circuit operation shown in FIGURE 6;

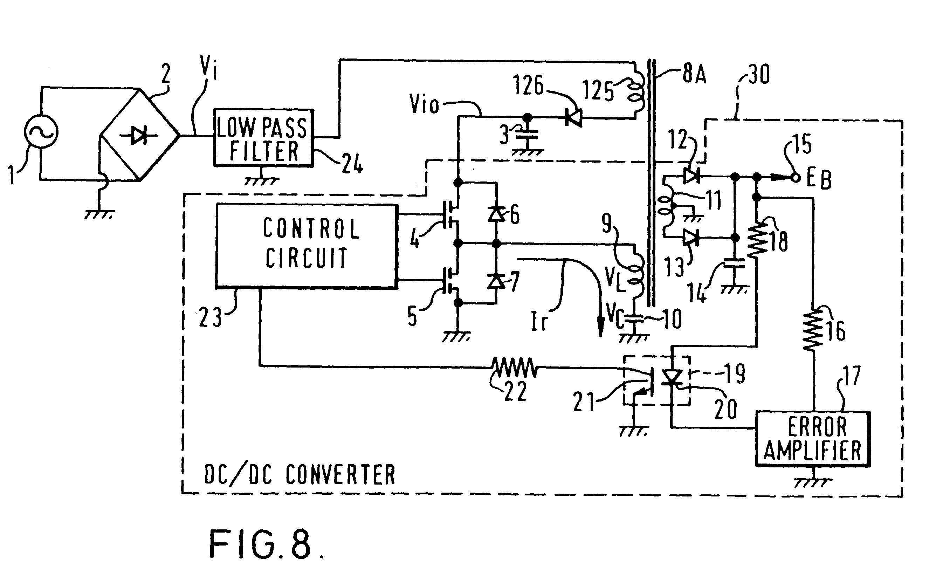

FIGURE 8 is a circuit diagram showing a second embodiment of the AC/DC converter power circuit according to the present invention;

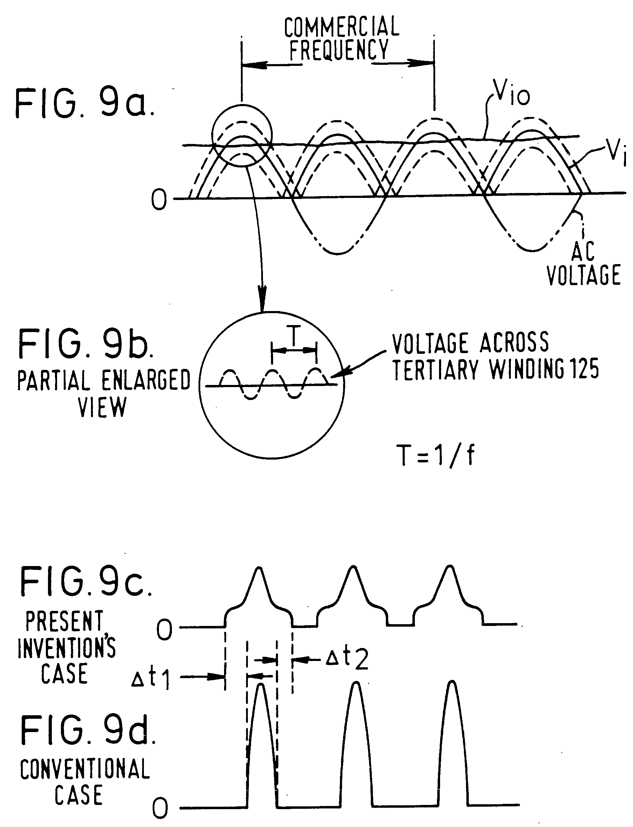

FIGURE 9 is a waveform diagram explaining the circuit operation as shown in FIGURE 8:

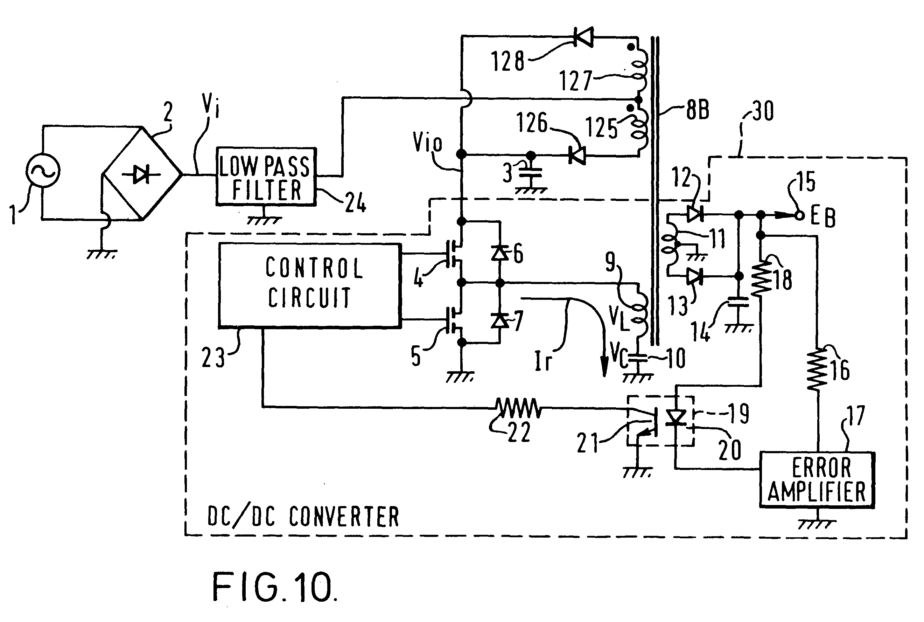

FIGURE 10 is a circuit diagram showing a third embodiment of the AC/DC converter power circuit according to the present invention;

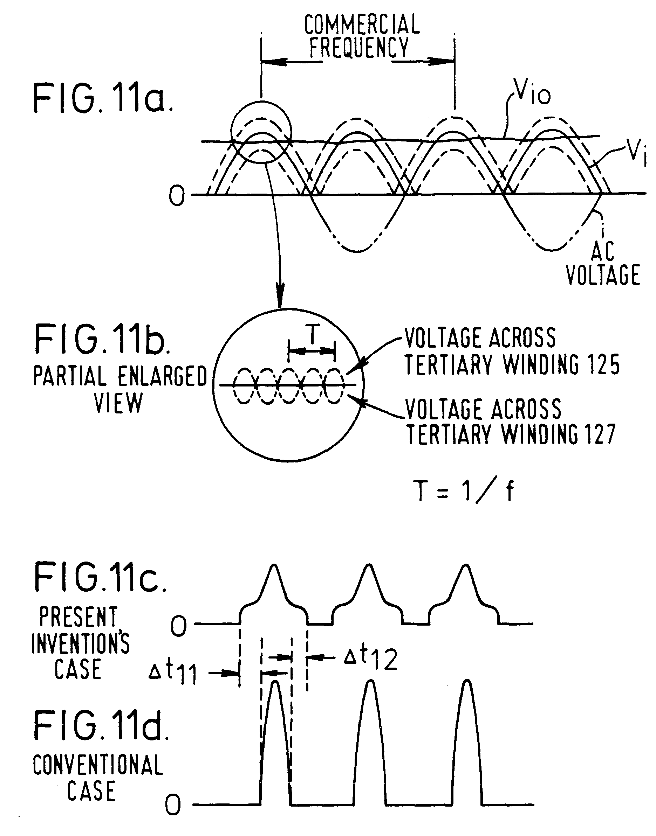

FIGURE 11 is a waveform diagram showing a circuit operation as shown in FIGURE 10;

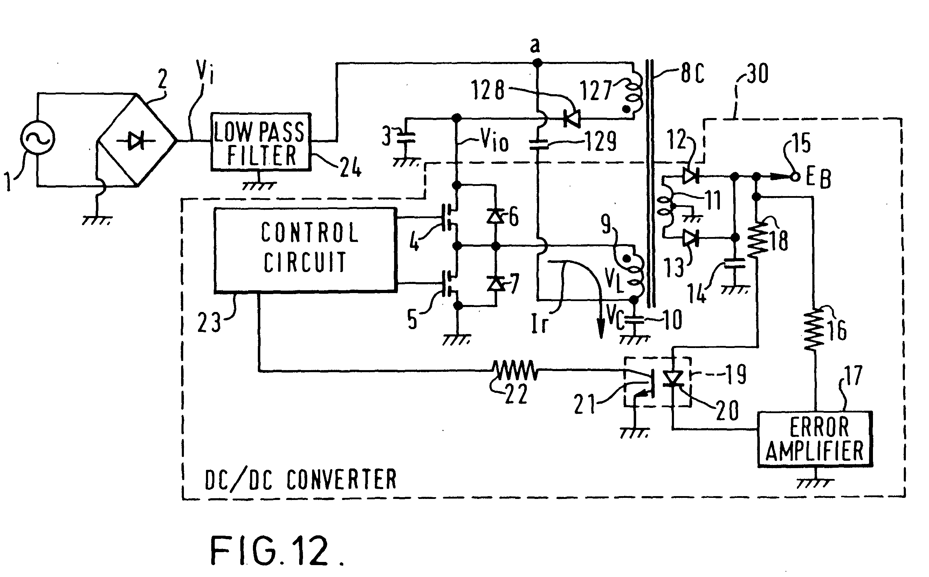

FIGURE 12 is a circuit diagram showing a fourth embodiment of the AC/DC converter power circuit according to the present invention;

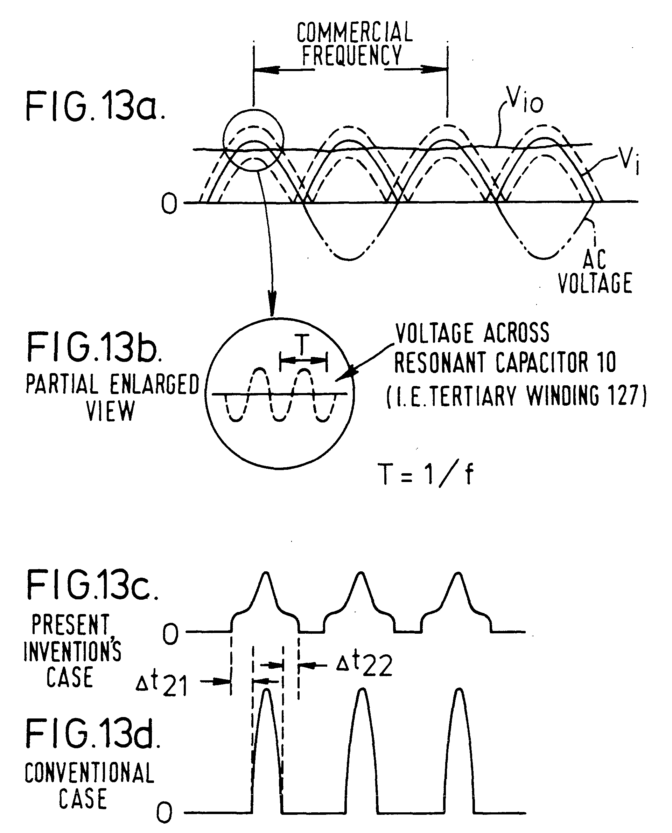

FIGURE 13 is a waveform diagram showing a circuit operation as shown in FIGURE 12: and

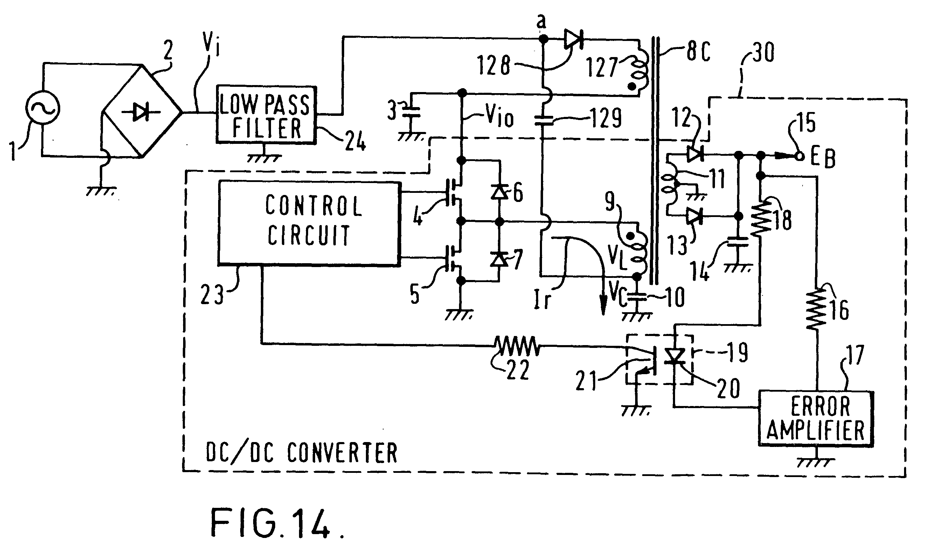

FIGURE 14 is a circuit diagram showing a fifth embodiment of the AC/DC converter power circuit according to the present invention.

The present invention will be described in detail with reference to the FIGURES 6 through 14. Throughout the drawings, reference numerals or letters in FIGURES 1 through 5 will be used to designate like or equivalent elements for simplicity of explanation.

Referring now to FIGURE 6, a first embodiment of the AC/DC converter power circuit according to the present invention will be described in detail. In FIGURE 6 the same components as those in FIGURE 1 are assigned with the same reference numerals or letters.

In FIGURE 6, a low pass filter 24 and a rectifier diode 25 are connected in series between a diode bridge rectifier circuit 2 and a smoothing capacitor 3 and a DC decoupling capacitor 26 connects a coupling node a of the low pass filter 24 and the rectifier diode 25 and a coupling node b of a primary winding 9 and a resonant capacitor 10, in compared to the conventional circuit as shown FIGURE 1. Other components are the same as those in FIGURE 1.

In FIGURE 6, the power supply source voltage from a commercial AC power supply source 1 is full-wave rectified in a diode bridge rectifier circuit 2 to be output to the coupling node a via the low pass filter 24. The low pass filter 24 (mentioned after in detail) is provided for decoupling high frequency components which occur in the resonant capacitor 10 in accompany with the rectification of the sine-wave voltage VC to inhibit their flow into the diode bridge rectifier circuit 2. At the coupling node a, the AC voltage (resonant voltage) presenting across the resonant capacitor 10 is added to the full-wave rectified output voltage from the diode bridge rectifier 2 and the added voltage is smoothed by a smoothing capacitor 3 so as to be supplied the switching means of the DC/DC converter 30. The first rectifier is comprised of the diode bridge rectifier circuit 2 and the second rectifier circuit is comprised of the rectifier diode 25 and the smoothing capacitor 3.

In a DC/DC converter 30, MOS FETs 4, 5 are coupled in series between the positive output terminal of the smoothing capacitor 3 and the reference potential source so as that they serve as the first and second switching elements, respectively. Further the first and second diodes 6, 7 are coupled in parallel with the MOS FETs 4, 5, respectively, in the reverse bias direction. That is, the cathode and the anode of the diode 6 are connected to the drain and the source of the MOS FET 4. while the cathode and the anode of the diode 7 are connected to the drain and the source of the MOS FET 5. Gate pulses for turning ON/OFF the MOS FETs 4, 5 are alternately supplied from the control circuit 23 to the gates of the MOS FETs 4, 5. The coupling node between the first parallel circuit of the MOS FET 4 and the diode 6 and the second parallel circuit of the MOS FET 5 and the diode 7 is connected to the reference potential source via a series circuit of a primary winding 9 and a resonance capacitor 10 for inducing a predetermined AC voltage from the secondary winding 11 of the transformer 8. Generally, the AC voltage which is boosted according to a turn ratio of the primary winding and the secondary winding of the transformer 8 is output to the secondary winding 11. One end of the secondary winding 11 is connected to and AC voltage output terminal 15 via a rectifier diode 12, and the other end of the secondary winding 11 is connected to the DC voltage output terminal 15 via a rectifier diode 13. The shunt of the secondary winding 11 is connected to the reference potential source. The cathodes of the diodes 12 and 13 are connected together, and a smoothing capacitor 14 is connected between the coupling node and the reference potential source. The third rectifier for full-wave rectifying the AC voltage on the secondary winding 11 of the transformer and then smoothing the rectified AC voltage comprised of the rectifier diodes 12 and 13 and the smoothing capacitor 14. A DC voltage EB from the DC voltage output terminal 15 is supplied to an error amplifier 17 via a resistor 16. The DC voltage EB is compared with the reference value and amplified in the error amplifier 17. According to the error voltage that is the output of the error amplifier 17, a current flows into a series circuit of a resistor 18 and a light emitting diode 20. The light emitting diode 20 and a light sensing diode 21 comprise a photo coupler 19, the error signal flowing to the light emitting diode 20 is transmitted to the light sensing transistor 21 so as to return to the control circuit 23 via a resistor 22 as a control signal. The control circuit 23 for controlling the ON/OFF operation of the first and the second switching elements, i.e., the MOS FETs 4, 5 alternately changes the frequency of the gate pulse which supply to the MOS FETs 4, 5 by the feedback control signal and controls the ON/OFF cycle of the MOS FETs 4, 5 so as to always stabilize the output voltage EB.

Next, the circuit operation of FIGURE 6 will be explained in reference to FIGURE 7.

The DC/DC converter 30 carries out the same operation as that of the conventional circuit in FIGURE 1. The gate pulses VG1 and VG2 are supplied to the gates of the MOS FETs 4. 5 at the timings a, b as shown in FIGURE 2. A sine-wave current Ir as shown in FIGURE 2-e flows through the series circuit of the primary winding 9 of the transformer 8 and the resonant capacitor 10 in the periods A to D as shown by the arrows in FIGURES 3-a through 3-d, respectively. As a result, sine-wave voltages VL and VC having waveforms as shown in FIGURES 2-d, 2-c are generated in the primary winding 9 and the resonant capacitor 10. In the secondary side of the transformer 8, a voltage boosted in proportion to the sine-wave voltage VL presenting across the primary winding 9 according to the turn ratio is induced. The induced AC voltage is rectified by the full-wave rectifier comprised of the rectifier diodes 12, 13. smoothed by the smoothing capacitor 14, and then output as a output DC voltage EB. The output voltage EB is controlled according to the controlling characteristic as shown in FIGURE 4 in the same way as the conventional way. The output voltage EB being added to the error amplifier 17 changes a switching frequency (operation frequency) of the MOS FETs 4, 5 which operate as a switching element by returning the error voltage compared and smoothed by the error amplifier 17 via the photo coupler 19 so as to stabilize the output voltage EB.

Next, operations of the first and the second rectifier in the AC power supply side will be explained. To a rectified output voltage Vi (a pulsating current voltage having twice frequency as much as the commercial frequency) obtained from the diode bridge rectifier circuit 2 the sine-wave voltage VC presenting across the resonant capacitor 10 is added via the DC decoupling capacitor 26. The added voltage is obtained by interposing the voltage presenting across the resonant capacitor 10 (only its envelope is shown by a dotted line) with the rectifier output voltage, thus the added voltage having a twice frequency to the commercial power supply frequency (shown by a solid line) as shown in FIGURE 7-a. The added voltage is added to the anode of the rectifier diode 25 and rectified, and it also smoothed by the smoothing capacitor 3 so as to be supplied to the DC/DC converter 30 as an input DC voltage. The waveform of the voltage presenting across the resonant capacitor 10 is shown in FIGURE 7-b. It shapes a sine-wave according to an LC resonant. The period T of the sine-wave in FIGURE 7-b matches to the period of the switching frequency f for the MOS FETs 4, 5.

If the sine-wave voltage VC as shown in FIGURE 7-b is applied to the anode of the rectifier diode 25 via the DC decoupling capacitor 26 the rectifier diode 25 is turned ON earlier by a time interval △ t1 and turned OFF later by a time interval Δ t2 due to the extra sine-wave voltage VC, compared with the conventional circuit as shown in FIGURE 7-c. In other words, the conductive period is extended by the time interval △ t1 + Δ t2, compared with the conventional circuit. The rectified current before being smoothed (rectifier diode 25) according to the embodiment of the present invention is shown in FIGURE 7-c and the rectified current (the same as FIGURE 5-b) before being smoothed (diode bridge rectifier circuit 2) according to the conventional circuit is shown in FIGURE 7-d.

As described above, if the conductive period of the rectified current is extended the power factor of the power line is increased and the harmonic waves current contained in the rectified current is also reduced.

Here, the circuit is able to be operated without the low pass filter 24 for not flowing the high frequency components which is generated when the sine-wave voltage VC is rectified to the diode bridge rectifier circuit 2. However, without the low pass filter 24 a diode bridge rectifier having a earlier switching characteristic than the conventional circuit will be required and there will be a problem that an unwanted undesired spurious emission (high frequency components) to the AC power supply source 1 will increases.

Referring now to FIGURE 8, a second embodiment of the AC/DC converter power circuit according to the present invention will be described in detail. In FIGURE 8 the same components as those in FIGURE 1 are assigned with the same reference numerals or letters.

In FIGURE 8, a low pass filter 24, a tertiary winding 125 of the transformer 8A and a rectifier diode 126 are newly connected in serice between the diode bridge rectifior circuit 2 and the smoothing capacitor 3 in the conventional circuit as shown in FIGURE 1. The transformer 8A has the primary winding 9, the secondary winding 11 and the tertiary winding 125. Other components are as same as those in FIGURE 1.

In FIGURE 8, the power supply voltage from the commercial AC power supply 1 is full-wave rectified in the diode bridge rectifier circuit 2 as the first rectifier and then applying the rectified AC voltage to one end of the tertiary winding 125 of the transformer 8A via the low pass filter 24. The low pass filter 24 (mentioned after in detail) is for decoupling a sine-wave voltage (high frequency components) generated in the tertiary winding 125 to flow to the diode bridge rectifier circuit 2. The sine-wave voltage induced from the voltage presenting across the primary winding 9 presents across the tertiary winding 125 of the transformer 8A. The sine-wave voltage is added to the full-wave rectified output voltage from the diode bridge rectifier circuit 2, rectified and smoothed by the rectifier diode 126 and the smoothing capacitor 3 which comprise the second rectifier so as to be supplied to the switching means of a DC/DC converter.

The DC/DC converter 30 connects MOS FETs 4, 5 as the first and the second switching elements in series between the output terminal of the positive pole of the smoothing capacitor 3 and the reference potential source. And further. it connects the first diode 6 and the second diode 7 in parallel with the MOS FETs 4, 5 with the polarity where the current flows in the opposite direction to each switching current of the MOS FETs 4, 5. That is, the cathode and the anode of the diode 6 are connected to the drain and the source of the MOS FET 4, while the cathode and the anode of the diode 7 are connected to the drain and the source of the MOS FET 5. A gate pulse for turning ON/OFF the MOS FETs 4, 5 from the control circuit 23 alternately is supplied to each gate of the MOS FETs 4, 5. A series circuit of a primary winding 9 of the transformer 8A and a resonant capacitor 10 are connected between the coupling node of the first parallel circuit which is comprised of the MOS FET 4 and the diode 6 and the second parallel circuit which is comprised of the MOS FET 5 and the diode 7 and the reference potential source so as to generate a predetermined AC voltage from the secondary winding 11 of the transformer 8A. The first parallel circuit comprised of the MOS FET 4 and the diode 6, the series circuit comprised of the primary winding 0 and the resonant capacitor 10 and the control circuit comprise the half-bridge type high frequency inverter for converting the DC voltage into an AC voltage.

Generally, the AC power voltage which is boosted according to a turn ratio of the primary winding and the secondary winding of the transformer 8A is output to the secondary winding 11. One end of the secondary winding 11 is connected to an AC voltage output terminal 15 via a rectifier diode 12, and the other end of the secondary winding 11 is connected to the DC voltage output terminal 15 via a rectifier diode 13. The shunt of the secondary winding 11 is connected to the reference potential source. The cathodes of the diodes 12 and 13 are connected commonly, and a smoothing capacitor 14 is connected between the coupling node and the reference potential source. The secondary winding 11, the rectifier diodes 12 and 13, and the ground line connected to the shunt of the secondary winding 11. the smoothing capacitor 14 constitute the third rectifier for full-wave rectifying and then smoothing the rectified AC voltage. A DC voltage EB from the DC voltage output terminal 15 is supplied to an error amplifier 17 via a resistor 16. The DC voltage EB is compared with the reference value and amplified in the error amplifier 17. According to the error voltage that is the output of the error amplifier 17, a current flows into a series circuit of a resistor 18 and a light emitting diode 20. The light emitting diode 20 and a light sensing transistor 21 comprise a photo coupler 19, the error signal flowing to the light emitting diode 20 is transmitted to the light sensing transistor 21 so as to return to the control circuit 23 via a resistor 22 as a control signal. The control circuit 23 for controlling the ON/OFF of the first and the second switching elements, i.e., the MOS FETs 4, 5 alternately changes the frequency of the gate pulse which supply to the MOS FETs 4, 5 by the feedback control signal and controls the ON/OFF cycle of the MOS FETs 4, 5 so as to always stabilize the output voltage EB.

Referring now to FIGURE 9, the operation of the second embodiment of the AC/DC converter power circuit as shown in FIGURE 8 will be described hereinafter.

The DC/DC converter 30 operates the same operation as the conventional circuit as shown in FIGURE 1. Each gate pulses VG1 and VG2 are supplied to each gates of MOS FETs 4 and 5 by the timings as shown in FIGURES 2-a, 2-b. A sine-wave current Ir having a waveform as shown in FIGURE 2-e flows as shown in FIGURES 3-a through 3-d to a series circuit of the primary winding 9 of the transformer 8A and the resonant capacitor 10 in each periods A to D. As a result, sine-wave voltages VL and VC having waveforms as shown in FIGURES 2-d. 2-c are generated in the primary winding 9 and the resonant capacitor 10. In the secondary side of the transformer 8A a voltage which is proportional to the sine-wave voltage VL presenting in the primary winding 9 is generated according to the turn ratio. The voltage is rectified by the full-wave rectifier comprised of the rectifier diodes 12, 13, smoothed by the smoothing capacitor 14, and then output as an output DC voltage EB. The output voltage EB is controlled according to the controlling characteristic as shown in FIGURE 4 in the same way as the conventional way as shown in FIGURE 1. The output voltage EB being added to the error amplifier 17 changes a switching frequency (operation frequency) of the MOS FETs 4, 5 which operate as a switching element by returning the error voltage compared and smoothed by the error amplifier 17 via the photo coupler 19 so as to stabilize the output voltage EB.

Next, operations of the first and the second rectifiers in the AC input section and the tertiary winding of the transformer 8A will be explained. A rectified output voltage Vi (a pulsating current voltage having twice frequency as much as the commercial frequency obtained from the diode bridge rectifier circuit 2 as the first rectifier circuit is supplied to the rectifier diode 126 as the second rectifier and the smoothing capacitor 3 via the tertiary winding 125 of the transformer 8A. At this time. the same sine-wave voltage as the sine-wave voltage (resonant voltage) generated in the primary winding 9 of the transistor 8A lead in the tertiary winding 125 based on the sine-wave voltage in the primary winding 9 as mentioned above is added to the full-wave rectified output voltage Vi from the diode bridge rectifier circuit 2. If the added voltage becomes greater than the voltage generated in the smoothing capacitor 3 the rectifier diode 126 is turned ON by the switching frequency and the smoothing capacitor 3 is charged. At this time, the DC voltage generated in the smoothing capacitor 3 is supplied to the DC/DC converter 30 as an input.

FIGURE 9-a shows a voltage obtained by superposing the voltage presenting across the winding 125 (only its envelope is shown by a dotted line) with the rectified output voltage Vi having a twice frequency as much as the commercial frequency (Vi shown by a solid line). FIGURE 9-b shows a waveform of the voltage presenting across the tertiary winding 125. The waveform of the voltage is a sine-wave according to the LC resonance by the primary winding 9 and the resonant capacitor 10. The frequency T of the sine-wave as shown in FIGURE 9-b matches to the switching frequency f of the MOS FETs 4. 5.

If the sine-wave voltage as shown in FIGURE 9-b is applied to the anode of the rectifier diode 126 via the tertiary winding 125, the rectifier diode 126 is turned ON earlier by the time interval △ t1 while turned OFF later by the time interval Δ t2 due to the extra sine-wave voltage, compared with the conventional circuit as shown in FIGURE 9-c. In other words, the conductive period of the waveform as shown in FIGURE 9-c is extended by the time interval △ t1 + Δ t2. compared with the conventional circuit, so that the rectifier current waveform is close to the an ideal sine-halfwave. The rectified current before smoothed (rectifier diode 128) according to the embodiment of the present invention is shown in FIGURE 9-c and the rectified current (the same as FIGURE 5-b) before smoothed (diode bridge rectifier circuit 2) according to the present invention is shown in FIGURE 9-d.

In the second embodiment of the invention, in similar to the first embodiment, if the conducting period of the rectified current is extended the power factor of the power line is increased and the harmonic waves current contained in the rectified current is also reduced.

Here, the circuit is able to be operated without the low pass filter 24 for not flowing the high frequency components of the sine-wave voltage which is generated in the tertiary winding 125 to the diode bridge rectifier circuit 2. However, without the low pass filter 24 a diode bridge rectifier circuit 2 having a earlier switching characteristic than the conventional circuit will be required and there will be a problem that an unwanted undesired spurious emission (high frequency components) to the AC power supply 1 will increases.

Referring now to FIGURE 10, a third embodiment of the AC/DC converter power circuit according to the present invention will be described in detail.

In FIGURE 10, the low pass filter 24, the tertiary windings 125 and 127 of the transformer 8B and the rectifier diodes 126 and 128 are connected between the diode bridge rectifier circuit 2 and the smoothing capacitor 3 in the conventional circuit as shown in FIGURE 1. The transformer 8B is comprised of additional tertiary windings 125 and 127 wound in opposite directions with each other than the primary winding 9 and the secondary winding 11. That Is, the output terminal of the diode bridge rectifier circuit 2 is connected to the shunt of the tertiary windings 125 and 127 wound in opposite phase directions with each other in the transformer of the DC/DC converter 30 via the low pass filter 24. The rectifier diode 126 is connected to one end of the tertiary winding 125 so that its anode is face to the tertiary winding 127, the rectifier diode 128 is connected to one end of the tertiary winding 127 so that its anode is face to the tertiary winding 127. The smoothing capacitor 3 is connected to a coupling node of the cathodes of the first and the second rectifier diodes 126, 128 and the reference potential source so as to supply the DC voltage generated in the smoothing capacitor 3 to the switching means of the DC/DC converter 30. Here, the first rectifier is comprised of the diode bridge rectifier circuit 2 and the second rectifier for full-wave rectifying and smoothing the voltage presenting across the tertiary windings 125 and 127 is comprised of the first and the second rectifier diodes 126 and 128 and the smoothing capacitor 3. Since the construction of the DC/DC converter 30 is as same as that in FIGURE 8 it is not explained here.

Referring now to FIGURE 11, the operation of the third embodiment of the AC/DC converter power circuit as shown in FIGURE 10 will be described hereinafter.

In FIGURE 10, the power supply voltage from the commercial AC power supply source 1 is full-wave rectified by the diode bridge rectifier circuit 2 constituting the first rectifion and then applied to the shunt of the tertiary windings 125 and 127 of the transformer 8B via the low pass filter 24. The low pass filter 24 (mentioned after in detail) is for decoupling the high frequency components of the sine-wave voltage generated in the tertiary windings 12b and 127 to flow to the diode bridge rectifier circuit 2. Opposite phase sine-wave voltages (shifted 180 degree each other) induced based on the voltage (resonant voltage) presenting across the primary winding 9 present across the tertiary windings 125 and 127 of the transformer 8B. The sine-wave voltages are added to the full-wave rectified output voltage Vi from the diode bridge rectifier circuit 2, if the added voltage exceeds the voltage generated in the smoothing capacitor 3 the rectifier diode 126 and the rectifier diode 128 are alternately turned ON for every half cycle period and charged to the smoothing capacitor 3. At this time the DC voltage generated in the smoothing capacitor 3 is input to the DC/DC converter 30. In the tertiary windings 125 and 127, the same sine-wave voltages as the voltage VL are generated in the primary winding 9 (see FIGURE 2) at amplitudes defined by their winding turns and a 180 degree phase difference therebetween. The voltages are added to the original rectified output voltage Vi (a pulsating current having a twice frequency as the commercial power supply source frequency) of the diode bridge rectifier circuit 2, rectified by the rectifier diodes 126 and 128 of the second rectifier and smoothed by the smoothing capacitor 3 so as to supply to the input DC voltage of the DC/DC converter.

FIGURE 11-a shows a voltage which is obtained by adding the voltages presenting across the tertiary windings 125 and 127 (only there envelopes of the both voltages are shown by a dotted line) with the rectified output voltage Vi having a twice frequency as much as the commercial frequency (Vi shown by a solid line). FIGURE 11-b shows the waveforms of the voltage presenting across the tertiary windings 125 and 127. These waveforms of are sine-waves according to the LC resonance by the primary winding 9 and the resonant capacitor 10. The frequency T of the sine-wave as shown in FIGURE 11-b matches to the switching frequency f of the MOS FETs 4, 5.

If the opposite phase sine-wave voltages as shown in FIGURE 11-b are applied to the anodes of the rectifier diodes 126 and 128 via the tertiary windings 125 and 127 the rectifier diodes 126 and 128 are turned ON earlier by the time interval △ t11 but turned OFF later by the time interval △ t11. due to the extra sine-wave voltage, compared with the conventional circuit as shown in FIGURE 11-c. In other words, the conductive period of the waveform as shown in FIGURE 11-c is extended by the time interval △ t11 + △ t12. compared with the conventional circuit as shown in FIGURE 11-d, so that the rectified current waveform is close to the ideal sine-halfwave. The rectified current before being smoothed (after rectified by the rectifier diodes 126 and 128) according to embodiment of the present invention is shown in FIGURE 11-c, and the rectified current (the same as FIGURE 5-b) before being smoothed (after rectified by the diode bridge rectifier circuit 2) according to the conventionl circuit is shown in FIGURE 11-d. According to the embodiment of the present invention, since the AC voltages having the opposite phases induced in the windings 125 and 127 are superposed it is possible to increase the power factor more than that of the circuit of the embodiment as shown in FIGURE 8 and also to reduce the harmonic wave current contained in the rectified current.

Since the operation of the DC/DC converter 30 is as same as that of the circuit as shown in FIGURE 8 it is not explained here.

As embodiments described above, if the conducting period of the rectified current is extended the power factor of the power line increases and also the harmonic wave current contained in rectified current decrease.

Here, the circuit is able to be operated without the low pass filter 24 for decoupling the high frequency components generated in the tertiary windings 125 and 127 to the diode bridge rectifier circuit 2. However, without the low pass filter 24 a diode bridge rectifier having a earlier switching characteristic than the conventional circuit will be required and there will be a problem that an undesired spurious emission (high frequency components) to the AC power supply 1 will increases.

Referring now to FIGURE 12, a fourth embodiment of the AC/DC converter power circuit according to the present invention will be described in detail.

In FIGURE 12, the low passfilter 24, the tertiary winding 127 of the transformer 8C and the rectifier diode 128 are connected between the diode bridge rectifier circuit 2 and the smoothing capacitor 3 in the conventional circuit as shown in FIGURE 1. The transformer 8B is comprised of the tertiary winding 127 wound in the direction opposite to the primary winding 9 in addition to the primary winding 9 and the secondary winding 11. And, the voltage generated in the coupling node of the primary winding 9 and the resonant capacitor 10 is supplied to the output terminal a of the low pass filter 24 via the DC decoupling capacitor 129. That is, the output terminal of the diode bridge rectifier circuit 2 is connected to one end of the tertiary winding 127 via the low pass filter 24 and the other end of the tertiary winding 127 is connected to the rectifier diode 128 as the second rectifier comprised of the rectifier diode 128 and the smoothing capacitor 3. On the other hand, the coupling node of the primary winding 9 and the resonant capacitor 10 is connected to one end of the tertiary winding 127 via the DC blocking capacitor 129. The sine-wave voltage generated in the tertiary winding 127 and the sine-wave voltage of the resonant capacitor 10 having the same phases as the sine-wave voltage in tertiary winding 127 are added to the rectified output voltage Vi from the diode bridge rectifier circuit 2 and supplied to the second rectifier circuit so that the rectified and smoothed DC voltage is supplied to the switching means of the DC/DC converter 30. Since the construction of the DC/DC converter 30 is as same as that in FIGURE 8 it is not explained here,

Referring now to FIGURE 13, the operation of the fourth embodiment of the AC/DC converter power circuit as shown in FIGURE 12 will be described hereinafter.

In FIGURE 12, the power supply voltage from the commercial AC power supply source 1 is full-wave rectified by the diode bridge rectifier circuit 2 constituting the first rectifier and then applied to one end of the tertiary winding 127 of the transformer 8C via the low pass filter 24. The low pass filter (mentioned after in detail) is for decoupling the high frequency components of the sine-wave voltage generated in the tertiary winding 127 to flow to the diode bridge rectifier circuit 2. The sine-wave voltage induced from the voltage (resonant voltage) presenting across the primary winding 9 presents across the tertiary winding 127 of the transformer 8C. Since the tertiary winding 127 is wound in the direction opposite to the primary winding 9, a voltage which is proportional to the voltage -VL having the phase opposite to the sine-wave voltage VL generated in the primary winding 9, in other words, a sine-wave voltage having the same phase as the voltage VC generated in the resonant capacitor 10 is generated in the tertiary winding 127 (see FIGURE 2). Therefore, to the rectified output voltage Vi the sine-wave voltage generated in the tertiary winding 127 is added at a point-a and the sine-wave voltage of the resonant capacitor 10 having the same phase as the sine-wave voltage of the tertiary winding 127 is also added. The added voltage is supplied to the smoothing capacitor 3 via the rectifier diode 128. However, if the added voltage exceeds the voltage presenting across the smoothing capacitor the rectifier diode 128 is turned ON by a switching period and the smoothing capacitor is charged, so that the DC voltage generated in the smoothing capacitor 3 is supplied to the DC/DC converter 30 as an input. In the embodiment according to the present invention as described above, since the two sine-wave voltages of the switching frequency is added to the rectified output voltage Vi of the bridge rectifier diode circuit 2 in the same phases the added amount (added amplitude of the sine-wave voltage) is larger that the embodiment in FIGURE 8, so as to increase the power factor and to reduce the harmonic waves current contained in the rectified current compared with the embodiment in FIGURE 8.

FIGURE 13-a shows a voltage which is obtained by adding the voltage presenting across the resonant capacitor 10 and the voltage presenting across the winding 127 (only there envelopes of the both voltages are shown by a dotted line) with the rectified output voltage having a twice frequency as much as the commercial frequency (Vi shown by a solid line). FIGURE 13-b shows the waveform of the voltage which is obtained by adding the voltage presenting across resonant capacitor 10 with the voltage presenting across the winding 127 in the same phases. This waveform is a sine-wave according to the LC resonance by the primary winding 9 and the capacitor 10. The frequency T of the sine-wave as shown in FIGURE 13-b matches to the switching frequency f of the MOS FETs 4. 5.

If the sine-wave voltage as shown in FIGURE 13-b is applied to the rectifier diode 128 via the tertiary winding 127 the rectifier diode 128 is turned ON earlier by the time interval Δ t21 while turned OFF later by the time interval Δ t 22 due to the extra sine-wave voltage, compared with the conventional circuit as shown in FIGURE 13-c. In other words, the conducting period of the waveform as shown in FIGURE 13-c is extended by the time interval Δ t21 + △ t22, compared with the conventional circuit as shown in FIGURE 13-d, so that the rectified current waveform is close to the ideal half wave of the sine-wave. The rectified current before being smoothed (after rectified by the rectifier diode 128) according to the embodiment of the present invention is shown in FIGURE 13-c. and the rectified current (the same as FIGURE 5-b) before being smoothed (after rectified by the diode bridge rectifier circuit 2) according to the conventional circuit is shown in FIGURE 13-d. Therefore in the embodiment of the present invention, since the two sine-wave voltages of the switching frequency are added to the rectified output voltage Vi of the diode bridge rectifier circuit 2 in the same phases the added amount (added amplitude of the sine-wave voltage) is larger than that of the embodiment in FIGURE 8 and the power factor can increase more than the embodiment in FIGURE 8.

Since the operation of the DC/DC converter 30 is same as that of the circuit in FIGURE 8 it is not explained here.

As the embodiment mentioned above, if the conducting period of the rectified current is extended the power factor of the power line increases and the harmonic waves current contained in the rectified current also reduces.

Here, the circuit is able to be operated without the low pass filter 24 for decoupling the high frequency components generated in the tertiary windings 125 and 127 to the diode bridge rectifier circuit 2. However, without the low pass filter 24 a diode bridge rectifier having a earlier switching characteristic than the conventional circuit will be required and there will be a problem that an unwanted undesired spurious emission (high frequency componente) to the AC power supply 1 will increases.

Referring now to FIGURE 14, a fifth embodiment of the AC/DC converter power circuit according to the present invention will be described in detail.

In the embodiment as shown in FIGURE 12, the rectifior diode 128 is provided for the hot terminal side of the tertiary winding 127 so that its anode faces the tertiary winding. However, in the embodiment of the present invention as shown in FIGURE 14 the rectifier diode 128 is provided on the input of the tertiary winding 127 so that its cathode is coupled to the tertiary winding while its anode is coupled to the coupling node a. In the arrangement as shown in FIGURE 14 the same rectified output waveform and the rectified current waveform as these as shown in FIGURE 13-a through 13-c are obtained and the same operation and effect as the embodiment as shown in FIGURE 12 is also obtained.

According to the present invention as described above by adding a few parts to the conventional circuit it will be possible to increase the power factor of the power line and also to reduce the harmonic wave current contained in the rectified current.

As described above, the present invention can provide an extremely preferable AC/DC converter power supply circuit.

While there have been illustrated and described what are at present considered to be preferred embodiments of the present invention, it will be understood by those skilled in the art that various changes and modifications may be made, and equivalents may be substituted for clomonto thereof without departing from the true scope of the present invention. In addition, many modifications may be made to adapt a particular situation or material to the teaching of the present invention without departing from the central scope thereof. Therefor, it is intended that the present invention not be limited to the particular embodiment disclosed as the best mode contemplated for carrying out the present invention, but that the present invention includes all embodiments falling within the scope of the appended

## Claims

1. An AC/DC converter power supply circuit, comprising:
an AC power supply source (1) for generating a source voltage;
a first rectifier (2) for full-wave rectifying the AC power supply source voltage;
a second rectifier (25;3, 126;3) for further rectifying and smoothing the voltage rectified by the first rectifier;
a DC/DC converter (30) having a high frequency inverter which generates a second AC voltage, and which comprises a switching element (4, 5) adapted for receiving a DC voltage rectified and smoothed in the second rectifier circuit, a transformer (8) for receiving a switching current generated by the switching element to their primary winding, and a resonant capacitor (10) coupled in series with the primary winding;
**characterised in that** it further comprises adding means (26, 125, 127, 129) for adding the second AC voltage generated by the high frequency inverter of the DC/DC converter, in accordance with a resonance occurring in a series circuit of the primary winding of the transformer (8) and the resonant capacitor (10), to the first rectifier voltage outputted from the first rectifier circuit.

2. An AC/DC converter power supply circuit as claimed in claim 1, wherein the DC/DC converter includes:
a first parallel circuit which is comprises of a first switching element and a first diode connected in parallel with the first switching element as a polarity relation where a current flows in the opposite direction to a current flowing in the first switching element;
a second parallel circuit which is comprised of a second switching element turning ON/OFF oppositely to the first switching element and a second diode connected in parallel with the second switching element at a polarity relation where a current flows in the opposite direction to the current of the second switching element;
a connection for connecting a series circuit of the first and second parallel circuits between the output terminal of the second rectifier and a reference potential source;
the transformer having the primary winding connected to the coupling node of the first and second parallel circuits and a secondary winding for inducing a predetermined AC voltage;
a third rectifier for rectifying the AC voltage induced in the secondary winding of the transformer and then smoothing the rectified AC voltage; and
a control circuit responsive to the change of the DC voltage induced in the third rectifier for controlling the turning ON/OFF operations of the first and second switching elements.

3. An AC/DC converter power supply circuit as claimed in claim 1, wherein the first rectifier is comprised of a diode bridge rectifier circuit, and
the second rectifier is comprised of a rectifier diode and a smoothing capacitor.

4. An AC/DC converter power supply circuit as claimed in claim 1, wherein the adding means is provided for supplying a sinusoidal-wave AC voltage developed across the resonant capacitor to the output terminal of the first rectifier through a DC-blocking (or decoupling) capacitor.

5. An AC/DC converter power supply circuit as claimed in claim 2, wherein the control circuit is provided for detecting the DC voltage generated by the third rectifier, changing the ON/OFF frequencies of the first and the second switching elements in response to the detected voltage so as that the DC voltage generated by the third rectifier is kept in constant.

6. An AC/DC converter power supply circuit as claimed in claim 1, further comprising:
a low-pass filter (24) coupled between the first and second rectifiers,
wherein a sinusoidal-wave AC voltage developed across the resonant capacitor (10) is supplied to the low-pass filter through a DC-blocking capacitor (26).

7. An AC/DC converter power supply circuit as claimed in claim 1,
wherein the adding means includes a tertiary winding (125) on the transformer (8) for inducing an AC voltage analogous to the AC voltage generated in the high frequency inverter,
and wherein one end of the tertiary winding (125) is coupled to the first rectifier (2) and the other end is coupled to the second rectifier (126) so that the AC voltage induced in the tertiary winding (125) is supplied to the second rectifier (126).

8. An AC/DC converter power supply circuit as claimed in claim 1,
wherein the adding means includes a tertiary winding comprised of a first sub-winding (127) and a second sub-winding (125) wound on the transformer in an opposite polarity relation with each other for inducing AC voltages analogous to the AC voltage generated in the high frequency inverter on the first and second sub-windings,
and wherein one end of the first sub-winding is coupled to the first rectifier and the other end of the second sub-winding is coupled to the second rectifier so as that the AC voltages induced in the first and second sub-windings are supplied to the second rectifier.

9. An AC/DC converter power supply circuit as claimed in claim 1,
wherein the adding means includes a tertiary winding (127) on the transformer (8) for inducing an AC voltage analogous to the AC voltage generated in the high frequency inverter,
a first connection for coupling one end of the tertiary winding (127) to the first rectifier (2) and the other end of the tertiary winding (127) to the second rectifier (128) so that the AC voltage induced in the tertiary winding is supplied to the second rectifier; and
a second connection for supplying a sinusoidal-wave AC voltage developed across the resonant capacitor (10) to the output terminal of the first rectifier through a DC-blocking capacitor (129).

10. An AC/DC converter power supply circuit as claimed in claim 1, wherein
the second rectifier includes a rectifier diode for further rectifying the rectified voltage from the first rectifier and a smoothing capacitor for smoothing the voltage rectified in the rectifier diode; and
the adding means includes a first means comprised of a tertiary winding (127) on the transformer (8) for inducing an AC voltage analogous to the AC voltage generated in the high frequency inverter, wherein one end of the tertiary winding is coupled to the first rectifier (2) and the other end of the tertiary winding is coupled to the second rectifier (128) so that the AC voltage induced in the tertiary winding (127) is supplied to the second rectifier, and a second means for supplying the sinusoidal-wave AC voltage developed across the resonant capacitor (10) to the output terminal of the first rectifier (2) through a DC-blocking capacitor (129).

11. An AC/DC converter power supply circuit as claimed in any one of claims 7, 8 or 9, further comprising:
a low-pass filter (24) coupled between the first rectifier (2) and the tertiary winding (125; 127) of the transformer for blocking high frequency components from flowing through the first rectifier (2).

12. An AC/DC converter power supply circuit as claimed in claim 10, further comprising:
a low-pass filter (24) coupled between the first and second rectifiers for blocking high frequency components from flowing through the first rectifier.

## Patentansprüche

1. Stromversorgungsschaltung, die Wechselspannung in Gleichspannung umwandelt, umfassend:
eine Wechselspannungs-Stromversorgungsquelle (1), die eine Quellspannung erzeugt;
einen ersten Gleichrichter (2), der eine Doppelweggleichrichtung der Wechselspannung der Stromversorgungsquelle ausführt;
einen zweiten Gleichrichter (25; 3, 126; 3), der die vom ersten Gleichrichter gleichgerichtete Spannung weiter gleichrichtet und glättet;
einen Gleichspannungs/Gleichspannungs-Umsetzer (30), der einen Hochfrequenz-Wechselrichter aufweist, der eine zweite Wechselspannung erzeugt und ein Schaltbauteil (4, 5) enthält, das dafür eingerichtet ist, die in der zweiten Gleichrichterschaltung gleichgerichtete und geglättete Gleichspannung aufzunehmen, einen Transformator (8), der mit seiner Primärwicklung einen Schaltstrom aufnimmt, den das Schaltbauteil erzeugt, und einen Resonanzkondensator (10), der zur Primärwicklung in Reihe geschaltet ist,
**dadurch gekennzeichnet, dass** die Schaltung zudem eine Addiervorrichtung (26, 125, 127, 129) umfasst, die die zweite Wechselspannung, die der Hochfrequenz-Wechselrichter des Gleichspannungs/Gleichspannungs-Umsetzers erzeugt, zur ersten Gleichrichterspannung addiert, die die erste Gleichrichterschaltung erzeugt, und zwar aufgrund einer Resonanz, die in der Reihenschaltung aus der Primärwicklung des Transformators (8) und dem Resonanzkondensator (10) auftritt.

2. Stromversorgungsschaltung nach Anspruch 1, die Wechselspannung in Gleichspannung umwandelt, wobei der Gleichspannungs/Gleichspannungs-Umsetzer umfasst:
einen ersten Parallelschaltkreis, der aus einem ersten Schaltbauteil besteht und einer ersten Diode, die parallel zum ersten Schaltbauteil geschaltet ist, und zwar mit einer Polarität, bei der ein Strom entgegengesetzt zur Richtung des Stroms fließt, der im ersten Schaltbauteil fließt;
einen zweiten Parallelschaltkreis, der aus einem zweiten Schaltbauteil besteht, das entgegengesetzt zum ersten Schaltbauteil ein- und ausschaltet, und einer zweiten Diode, die parallel zum zweiten Schaltbauteil geschaltet ist, und zwar mit einer Polarität, bei der ein Strom entgegengesetzt zur Richtung des Stroms fließt, der im zweiten Schaltbauteil fließt;
eine Verbindung, die eine Reihenschaltung des ersten und des zweiten Parallelschaltkreises zwischen den Ausgangsanschluss des zweiten Gleichrichters und eine Bezugspotentialquelle schaltet;
einen Transformator, der eine Primärwicklung besitzt, die an den Verbindungsknoten des ersten und des zweiten Parallelschaltkreises angeschlossen ist, und eine Sekundärwicklung, in der eine vorbestimmte Wechselspannung induziert wird;
einen dritten Gleichrichter, der die in der Sekundärwicklung des Transformators induzierte Wechselspannung gleichrichtet und die gleichgerichtete Wechselspannung anschließend glättet; und
eine Steuerschaltung, die auf die Veränderung der im dritten Gleichrichter erzeugten Gleichspannung anspricht und damit die Ein- und Ausschaltvorgänge des ersten und des zweiten Schaltbauteils steuert.

3. Stromversorgungsschaltung nach Anspruch 1, die Wechselspannung in Gleichspannung umwandelt, wobei der erste Gleichrichter ein Dioden-Brückengleichrichter ist, und
der zweite Gleichrichter aus einer Gleichrichterdiode und einem Glättungskondensator besteht.

4. Stromversorgungsschaltung nach Anspruch 1, die Wechselspannung in Gleichspannung umwandelt, wobei die Addiervorrichtung dazu dient, eine am Resonanzkondensator gebildete sinusförmige Wechselspannung an den Ausgangsanschluss des ersten Gleichrichters zu liefern, und zwar über einen Gleichspannungs-Abblockkondensator bzw. Entkoppelkondensator.

5. Stromversorgungsschaltung nach Anspruch 2, die Wechselspannung in Gleichspannung umwandelt, wobei die Steuerschaltung zum Erfassen der Gleichspannung dient, die der dritte Gleichrichter erzeugt, und die Ein-Ausschaltfrequenz des ersten und zweiten Schaltbauteils abhängig von der erfassten Spannung verändert, damit die Gleichspannung konstant gehalten wird, die der dritte Gleichrichter erzeugt.

6. Stromversorgungsschaltung nach Anspruch 1, die Wechselspannung in Gleichspannung umwandelt, zudem umfassend:
ein zwischen den ersten Gleichrichter und den zweiten Gleichrichter geschaltetes Tiefpassfilter (24),
wobei eine am Resonanzkondensator (10) gebildete sinusförmige Wechselspannung dem Tiefpassfilter über einen Gleichspannungs-Abblockkondensator (26) zugeführt wird.

7. Stromversorgungsschaltung nach Anspruch 1, die Wechselspannung in Gleichspannung umwandelt,
wobei die Addiervorrichtung eine Tertiärwicklung (125) am Transformator (8) enthält, in der eine Wechselspannung analog zur Wechselspannung induziert wird, die im Hochfrequenz-Wechselrichter entsteht,
und wobei eine Seite der Tertiärwicklung (125) an den ersten Gleichrichter (2) angeschlossen ist, und die andere Seite an den zweiten Gleichrichter (126), damit die in der Tertiärwicklung (125) induzierte Wechselspannung in den zweiten Gleichrichter (126) eingespeist wird.

8. Stromversorgungsschaltung nach Anspruch 1, die Wechselspannung in Gleichspannung umwandelt,
wobei die Addiervorrichtung eine auf den Transformator gewickelte Tertiärwicklung enthält, die aus einer ersten Teilwicklung (127) und einer zweiten Teilwicklung (125) besteht, die zueinander mit unterschiedlicher Polarität gewickelt sind, damit in der ersten und der zweiten Teilwicklung Wechselspannungen analog zu der Wechselspannung induziert werden, die im Hochfrequenz-Wechselrichter erzeugt wird,
und wobei eine Seite der ersten Teilwicklung an den ersten Gleichrichter angeschlossen ist, und die andere Seite der zweiten Teilwicklung an den zweiten Gleichrichter, damit die in der ersten und zweiten Teilwicklung erzeugten Wechselspannungen in den zweiten Gleichrichter eingespeist werden.

9. Stromversorgungsschaltung nach Anspruch 1, die Wechselspannung in Gleichspannung umwandelt,
wobei die Addiervorrichtung eine Tertiärwicklung (127) am Transformator (8) enthält, in der eine Wechselspannung analog zur Wechselspannung induziert wird, die im Hochfrequenz-Wechselrichter entsteht,
und eine erste Verbindung, die eine Seite der Tertiärwicklung (127) an den ersten-Gleichrichter (2) anschließt und die andere Seite der Tertiärwicklung (127) an den zweiten Gleichrichter (128), damit die in der Tertiärwicklung induzierte Wechselspannung in den zweiten Gleichrichter eingespeist wird; und
eine zweite Verbindung zum Einspeisen einer am Resonanzkondensator (10) gebildeten sinusförmigen Wechselspannung in den Ausgangsanschluss des ersten Gleichrichters über einen Gleichspannungs-Abblockkondensator (129).

10. Stromversorgungsschaltung nach Anspruch 1, die Wechselspannung in Gleichspannung umwandelt, wobei
der zweite Gleichrichter eine Gleichrichterdiode enthält, die die gleichgerichtete Spannung aus dem ersten Gleichrichter weiter gleichrichtet, und einen Glättungskondensator, der die in der Gleichrichterdiode gleichgerichtete Spannung glättet; und
die Addiervorrichtung eine erste Einrichtung enthält, die aus der Tertiärwicklung (127) auf dem Transformator (8) besteht, damit eine Wechselspannung analog zur Wechselspannung induziert wird, die im Hochfrequenz-Wechselrichter entsteht, wobei eine Seite der Tertiärwicklung an den ersten Gleichrichter (2) angeschlossen ist und die andere Seite der Tertiärwicklung an den zweiten Gleichrichter (128), damit die in der Tertiärwicklung (127) induzierte Wechselspannung in den zweiten Gleichrichter eingespeist wird, und eine zweite Einrichtung, die eine am Resonanzkondensator (10) gebildete sinusförmige Wechselspannung über einen Gleichspannungs-Abblockkondensator (129) in den Ausgangsanschluss des ersten Gleichrichters (2) einspeist.

11. Stromversorgungsschaltung nach irgendeinem der Ansprüche 7, 8 oder 9, die Wechselspannung in Gleichspannung umwandelt, weiterhin umfassend:
ein Tiefpassfilter (24), das zwischen den ersten Gleichrichter (2) und die Tertiärwicklung (125; 127) des Transformators geschaltet ist und Hochfrequenzkomponenten daran hindert, durch den ersten Gleichrichter (2) zu fließen.

12. Stromversorgungsschaltung nach Anspruch 10, die Wechselspannung in Gleichspannung umwandelt, zudem umfassend:
ein Tiefpassfilter (24), das zwischen den ersten und zweiten Gleichrichter geschaltet ist und Hochfrequenzkomponenten daran hindert, durch den ersten Gleichrichter zu fließen.

## Revendications

1. Un circuit convertisseur courant alternatif - courant continu pour alimentation de puissance, comprenant :
une source (1) d'alimentation de puissance en courant alternatif pour produire une tension de source ;
un premier redresseur (2) pour redresser pleine onde la tension de la source d'alimentation de puissance en courant alternatif ;
un second redresseur (25;3, 126;3) pour redresser davantage et lisser la tension redressée par le premier redresseur ;
un convertisseur (30) courant continu - courant continu ayant un onduleur haute fréquence qui produit une seconde tension de courant alternatif, et qui comprend un élément de commutation (4, 5) adapté à recevoir une tension de courant continu redressée et lissée dans le second circuit redresseur, un transformateur (8) pour recevoir un courant de commutation produit par l'élément de commutation sur son enroülement primaire, et un condensateur résonant (10) couplé en série avec l'enroulement primaire ;
**caractérisé en ce qu'**il comprend en outre des moyens d'addition (26, 125, 127, 129) pour ajouter la seconde tension de courant alternatif produite par l'onduleur haute fréquence du convertisseur courant continu - courant continu, en accord avec une résonance apparaîssant dans un circuit série de l'enroulement primaire du transformateur (8) et du condensateur, résonant (10), à la tension du premier redresseur sortant du premier circuit redresseur.

2. Un circuit convertisseur courant alternatif - courant continu pour alimentation de puissance tel que revendiqué à la revendication 1, dans lequel le convertisseur courant continu - courant continu comprend:
un premier circuit parallèle qui se compose d'un premier élément de commutation et d'une première diode reliée en parallèle avec le premier élément de commutation sous une relation de polarité où un courant passe dans la direction opposée à un courant qui passe dans le premier élément de commutation ;
un second circuit parallèle qui se compose d'un second élément de commutation se mettant en service/hors service de manière opposée au premier élément de commutation et un seconde diode reliée en parallèle avec le premier élément de commutation sous une relation de polarité où un courant passe dans la direction opposée au courant du second élément de commutation ;
une liaison pour relier un circuit série des premier et second circuits parallèles entre la borne de sortie du second redresseur à une source de potentiel de référence ;
le transformateur ayant son enroulement primaire relié au noeud de couplage des premier et second circuits parallèles et un enroulement secondaire pour induire une tension prédéterminée de courant alternatif ;
un troisième redresseur pour redresser la tension de courant alternatif induite dans l'enroulement secondaire du transformateur et lisser ensuite la tension de courant alternatif redressée ; et
un circuit de commande répondant au changement de la tension de courant continu induite dans le troisième redresseur pour commander les opérations de mise en service/hors service des premier et second éléments de commutation.

3. Un circuit convertisseur courant alternatif - courant continu pour alimentation de puissance tel que revendiqué à la revendication 1, dans lequel le premier redresseur se compose d'un circuit redresseur à pont de diodes, et
le second redresseur se compose d'une diode redresseusse et d'un condensateur de lissage.

4. Un circuit convertisseur courant alternatif - courant continu pour alimentation de puissance tel que revendiqué à la revendication 1, dans lequel les moyens d'addition sont prévus pour appliquer une tension de courant alternatif d'onde sinusoïdale, développée aux bornes du condensateur résonant, sur la borne de sortie du premier redresseur par l'intermédiaire d'un condensateur de blocage de courant continu (ou de découplage)

5. Un circuit convertisseur courant alternatif - courant continu pour alimentation de puissance tel que revendiqué à la revendication 2, dans lequel le circuit de commande est prévu pour : détecter la tension de courant continu produite par le troisième redresseur, changer les fréquences de mise en service/hors service des premier et second éléments de commutation en réponse à la tension détectée de sorte que la tension de courant continue produite par le troisième redresseur est maintenu constante.

6. Un circuit convertisseur courant alternatif - courant continu pour alimentation de puissance tel que revendiqué à la revendication 1, comprenant en outre :
un filtre passe bas (24) couplé entre les premier et second redresseurs,
dans lequel une tension de courant alternatif d'onde sinusoïdale développée aux bornes du condensateur résonant (10) est appliquée au filtre passe-bas par l'intermédiaire d'un condensateur de blocage de courant continu (26).

7. Un circuit convertisseur courant alternatif - courant continu pour alimentation de puissance tel que revendiqué à la revendication 1,
dans lequel les moyens d'addition comprennent un enroulement tertiaire (125) sur le transformateur (8) pour induire une tension de courant alternatif analogue à la tension de courant alternatif produite dans l'onduleur haute fréquence,
et dans lequel une extrémité de l'enroulement tertiaire (125) est couplée au premier redresseur (2) et l'autre extrémité est couplée au second redresseur (126) de sorte que la tension de courant alternatif induite dans l'enroulement tertiaire (125) est appliquée au second redresseur (126).

8. Un circuit convertisseur courant alternatif - courant continu pour alimentation de puissance tel que revendiqué à la revendication 1,
dans lequel les moyens d'addition comprennent un enroulement tertiaire se composant d'un premier sous-enroulement (127) et d'un second sous-enroulement (125) enroulés sur le transformateur dans une relation de polarité opposée l'un à l'autre pour induire des tensions de courant alternatif analogues à la tension de courant alternatif produite dans l'onduleur haute fréquence sur les premier et second sous-enroulements,
et dans lequel une extrémité du premier sous-enroulement est couplée au premier redresseur et l'autre extrémité du second sous-enroulement est couplée au second redresseur de sorte que les tensions de courant alternatif induites dans les premier et second sous-enroulements sont appliquées au second redresseur.

9. Un circuit convertisseur courant alternatif - courant continu pour alimentation de puissance tel que revendiqué à la revendication 1,
dans lequel les moyens d'addition comprennent un enroulement tertiaire (127) sur le transformateur (8) pour induire une tension de courant alternatif analogue à la tension de courant alternatif produite dans l'onduleur haute fréquence,
une première liaison pour coupler une extrémité de l'enroulement tertiaire (127) au premier redresseur (2) et l'autre extrémité de l'enroulement tertiaire (127) au second redreseur (128) de sorte qu'une tension de courant alternatif induite dans l'enroulement tertiaire est appliquée au second redresseur ; et
une seconde liaison pour appliquer une tension de courant alternatif d'onde sinusoïdale, développée aux bornes du condensateur résonant (10), sur la borne de sortie du premier redresseur par l'intermédiaire d'un condensateur de blocage de courant continu (129).

10. Un circuit convertisseur courant alternatif - courant continu pour alimentation de puissance tel que revendiqué à la revendication 1, dans lequel
le second redresseur comprend une diode redresseuse pour davantage redresser la tension redressée provenant du premier redresseur et un condensateur de lissage pour lisser la tension redressée dans la diode redresseuse ; et
les moyens d'addition comprennent un premier moyen se composant d'un enroulement tertiaire (127) sur le transformateur (8) pour induire une tension de courant alternatif analogue à la tension de courant alternatif produite dans l'onduleur haute fréquence, dans lequel une extrémité de l'enroulement tertiaire est couplée au premier redresseur (2) et l'autre extrémité de l'enroulement tertiaire est couplé au second redresseur (128) de sorte que la tension de courant alternatif induite dans l'enroulement tertiaire (127) est appliquée au second redresseur, et un second moyen pour appliquer la tension de courant alternatif d'onde sinusoïdale, développée aux bornes du condensateur résonant (10), sur la borne de sortie du premier redresseur (2) par l'intermédiaire d'un condensateur de blocage de courant continu (129).

11. Un circuit convertisseur courant alternatif - courant continu pour alimentation de puissance tel que revendiqué dans une quelconque des revendications 7, 8 ou 9 comprenant en outre :
un filtre passe bas (24) couplé entre le premier redresseur (2) et l'enroulement tertiaire (125 ; 127) du transformateur pour empêcher à des composantes haute fréquence de passer à travers le premier redresseur (2).

12. Un circuit convertisseur courant alternatif - courant continu pour alimentation de puissance tel que revendiqué à la revendication 10, comprenant en outre :
un filtre passe-bas (24) couplé entre les premier et second redresseurs pour empêcher à des composantes haute fréquence de passer à travers le premier redresseur.
